(19) Europäisches Patentamt / European Patent Office / Office européen des brevets

(11) **EP 3 477 275 A1**

(12) **EUROPEAN PATENT APPLICATION**

(43) Date of publication:
01.05.2019 Bulletin 2019/18

(51) Int Cl.:
*G01N 1/22* (2006.01)  *G01N 21/3504* (2014.01)

(21) Application number: 17198247.3

(22) Date of filing: 25.10.2017

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
MA MD

(71) Applicants:
• **Commissariat à l'Energie Atomique et aux Energies Alternatives**
**75015 Paris (FR)**
• **Universität Ulm**
**89081 Ulm (DE)**

(72) Inventors:
• **GABRIEL, Jean-Christophe**
**38950 QUAIX-EN-CHARTREUSE (FR)**

• **THEISEN, Johannes**
**38000 GRENOBLE (FR)**
• **PENISSON, Christophe**
**38000 GRENOBLE (FR)**
• **ZEMB, Thomas**
**78220 VIROFLAY (FR)**
• **MIZAIKOFF, Boris**
**89081 ULM (DE)**
• **WILK, Andreas**
**89081 ULM (DE)**
• **KOKORIC, Vjekoslav**
**89081 ULM (DE)**

(74) Representative: **Gevers & Orès**
**41 avenue de Friedland**
**75008 Paris (FR)**

(54) **APPARATUS FOR THE MEASUREMENT OF CHEMICAL ACTIVITY COEFFICIENTS OF GAS PHASE SPECIES IN THERMODYNAMIC EQUILIBRIUM WITH LIQUID PHASE**

(57) The invention relates to an apparatus comprising a fluidic part (10) intended to contain a sample; an analytical part (30) comprising a waveguide (32); and a permeable membrane (20) closing the fluidic part (10), so as to physically separate the fluidic part (10) from the analytical chamber (30).

Fig. 1

EP 3 477 275 A1

## Description

### Field of the invention

The present invention relates to a device for the measurement of chemical activity coefficients of gas phase species in thermodynamic equilibrium with liquid phase. The invention also relates to a method for measuring the chemical activity coefficients of volatile chemical species dissolved in a gas phase mixture in thermodynamic equilibrium with a liquid phase using such an apparatus.

### Description of the Related Art

The chemical activity is a measure of the effective concentration of chemical species in a mixture. Giving access to this physicochemical parameter allows determination of the transfer free energy between phases knowing variation of activity and the number of species in the mixture.

The most straightforward method for measuring the chemical activity of volatile dissolved chemical species consists in the measurement of their partial vapor pressures at thermodynamic equilibrium. Among the designs developed to perform such measurements, establishing techniques are vapor phase osmometry, the Gibbs-van Ness apparatus and head-space gas chromatography.

Vapor phase osmometry exploits temperature change during evaporative equilibration between a drop of a non-volatile mixture, namely the sample, and those of a pure solvent in a thermalized system. One drop of pure solvent is placed on each of two symmetric thermistances until the thermal equilibrium is reached. After equilibration, one of the drops is substituted by the sample. As the vapor pressure of the sample is lower than the vapor pressure of the pure solvent, solvent molecules of the saturated vapor phase condense on the sample, increasing its temperature. Such a variation of temperature changes the resistance of the thermistances, giving access to the number of moles of the solvent and the dissolved material. Karimi *et al.* [1] use vapor phase osmometry to determine solvent/polymer interaction parameter of moderately concentrated polymer solutions. For very diluted and semi-diluted polymer solutions, the solvent/polymer interaction shows concentration dependency, which requires corrections on the interaction parameter. Indeed, this technique is not adapted for the measurement of chemical activity coefficients of ternary solutions, i.e., solutions with reverse micelles, unless making correction for the minor solvent. The technique cannot be used for determining concentration in the vapor phase and is unsuitable for volatile analytes and for measuring multi-component systems distinctively.

The Gibbs and Van Ness apparatus [2] measures total pressure and deduces total vapor pressure of the evaporating solution by the total pressure difference after equilibration. Although this technique allows measurement of chemical activity coefficients in binary mixtures with excellent precision, the experimental setup is complex and requires high-precision instruments and injection tools. For multi-component systems, the measurement of partial pressures depends on external modelling and on non-linearity, like, e.g., near a critical micellar concentration or cloud point temperature. Ronc and Ratcliff [3] propose an instrument derived from the Gibbs and Van Ness apparatus with increased working temperatures and pressures, yet the setup remains of a high complexity.

Head-space gas chromatography [4] allows multi-component measurement with high precision and selectivity. This method essentially applies to gaseous compounds that can be vaporized via heating without decomposition. The experimental method relies on creating a vapor phase above a sample in a gas chromatography vial. Thereafter, the extracted vapor phase is injected into a capillary column. Nevertheless, instrumentation is complex and cumbersome, and repeatability is difficult to achieve due to user variability, as well as sampling and injection issues. As a result, chemical engineering tables in usage are spline interpolations taken from parametric theory, based on a few measured points.

The recent integration of miniaturized chemical reactors and analytical techniques in microfluidic devices is of high interest [5]. The perspective of precisely controlling chemical process conditions and chemical kinetics at reduced size, complexity and cost make microfluidic devices good candidates to achieve non-perturbative measurements of chemical activity coefficients of volatile dissolved compounds. For the successful development of such devices differential measurements by variation of the sample must be achieved almost in real time and on-chip. This emphasizes the need to reach thermodynamic equilibrium in a short time. Furthermore, in order to overcome sampling and analysis off-line issues, one of the device requirements must be to enable non-destructive and in-line measurements of the vapor phase. The main drawbacks of microfluidic systems are their low throughput which significantly reduces their ability to be used for production purposes and their structural fragility which significantly reduces their lifetime and makes their implementation complex in industry.

Document US 2005/008993 A1 discloses a microscale bioreactor to perform simultaneous operations. The system allows rapid testing, process development and optimization by means of parallel micro-fermenters. The device consists of a layered assembly comprising at least one vessel optionally combined with a headspace, and a gas-permeable membrane that separates the vessel interior from the headspace. The vessel dimensions can be adapted either for integrating means to control at least one environmental parameter or for efficient gas-liquid contacting to control the level of dissolved oxygen. Notwithstanding its flexibility, the device design implies large mass transfer coefficients for gas-liquid-solid reaction and needs to be continuously flowed by oxygen to support cell, microbe and other microorganism growth. Inherently, the membrane serves as an aeration membrane and gives access to the external environment, making the overall structure not enclosed. Due to the specific application of the system, the design does not allow any superimposition of the vessel(s) with any analytical method. Only parallel operations are possible, increasing the overall footprint of the device. Hence, such a device cannot be used or directly adapted for both the measurements of chemical activity coefficients and in-line characterization.

**Summary of the invention**

The present invention proposes an apparatus for measuring chemical activity coefficients of volatile chemical species dissolved in a gas phase in thermodynamic equilibrium with a liquid phase whilst overcoming the complexity of prior art instruments.

The present invention uses the fact that chemical activity coefficients of species are identical, at thermodynamic equilibrium, on either side of the liquid-vapor interface. In order to measure this activity, the invention enables the controlled evaporation/permeation of a quantity of a sample solution and the measurement of the different partial pressures of its vapor phase constituents.

To solve the above-mentioned problem, the present invention proposes an apparatus comprising:

(a) a fluidic part intended to contain a sample;
(b) an analytical part comprising a waveguide; and
(c) a permeable membrane closing the fluidic part, so as to physically separate the fluidic part from the analytical chamber.

According to the different features of the invention that can be taken together or separately:

- said permeable membrane comprises pores configured to let vapor pass toward said analytical chamber while avoiding any passage of liquid toward said analytical part;
- the sample channel of the fluidic part extends between:

  - an input in fluid communication with a reservoir; and
  - an output in fluid communication with means enabling the liquid passively flowing or being actively pumped through the sample channel;

- the fluidic part has a volume between 1 pL and 1 L, preferably between 10 and 100 $\mu$L;
- the fluidic part has a cross-section with:

  - a width between 1 $\mu$m and 10 mm, preferably 2 mm;
  - a depth between 1 $\mu$m and 10 mm, preferably 0.5 mm; and
  - a length between 1 mm and 100 mm, preferably 10 to 100 mm;

- the membrane has a thickness between 1 nm and 1000 pm, preferably between 1 $\mu$m and 50 $\mu$m, and a porosity between 0.5 and 0.95, preferably between 0.55 and 0.95, more preferably between 0.7 and 0.95;
- the pores of the membrane have each a pore size between 1 nm and 100 nm, for instance between 10 nm and 100 nm depending on the liquid to be analyzed and the material used for the membrane;
- the pores of the membrane have a tortuosity between 1 and 5;
- the analytical part is sealed from the ambient atmosphere using valves and/or optical windows and/or a detection mean;
- the analytical part comprises a waveguide sealed with at least one optical window enabling radiation to cross it;
- the apparatus further comprising:

  - a light source;
  - means for detecting light passing through the waveguide ; and
  - optionally a computer to collect and treat the data received by the detection mean;

- the wavelength of the light source lies in the range 100 nm and 1 mm, preferably between 0.75 and 25 $\mu$m;

- the walls of the waveguide have a surface roughness lower than the radiation wavelength of the excitation source, preferably lower than a tenth of the radiation wavelength of the excitation source, the excitation source preferably emitting ultraviolet-visible light or terahertz radiation, more preferably emitting infrared radiation.

According to a second embodiment of the invention, the apparatus further comprises:

- an interconnection part arranged between the analytical chamber and the permeable membrane, said interconnection part comprising:
- a vapor permeable layer made of a material adapted to or coated with a material adapted to at least partially reflect radiation with wavelengths between 100 nm and 1 mm, preferably between 0.75 and 25 $\mu$m incident from the waveguide and, optionally, a vapor permeable support layer, to increase the rigidity of layer;
- a void volume left between the interconnection part and the membrane.

According to different features of the invention that can be taken together or separately:

- the apparatus further comprising M intermediate spacers, so that void volume is subdivided into M+1 discrete void volumes, with intermediate spacers increasing the rigidity of layer, preferably enough to substitute support layer;
- said layer comprises small apertures, preferably circular, of 1 $\mu$m to 2mm in diameter in case of circular apertures, preferably between 0.1 mm and 0.5 mm, wherein the number N of apertures of the layer is chosen so that the additional attenuation induced by the presence of the holes is less than 90%, preferably less than 50%, more preferably less than 25%, even more preferably less than 10%; and

- the rigid support comprises small apertures of about 0.4mm in diameter in case of circular apertures, preferably 1 $\mu$m to 2mm;
- the apparatus further comprises:

  - means for controlling temperature, pressure and humidity within the waveguide and the void volume
  - means to keep temperature, pressure and humidity constant over a given amount of time within the device;
  - mean to increase the temperature within the device.

The invention also concerns the use of an apparatus as previously described for measuring chemical activity coefficients of volatile chemical species dissolved in a gas phase in thermodynamic equilibrium with a liquid phase.
The invention also concerns the use of an apparatus as previously described for detection of species.
The invention also concerns a method for measuring the chemical activity coefficients of volatile chemical species dissolved in a gas phase mixture in thermodynamic equilibrium with a liquid phase using the apparatus as previously described comprising the following steps:

1) perform a reference measurement consisting of either a blank measurement with a flushed waveguide by perfusing purging gas using (36a) and (36b) for a single-waveguide analysis or continuous reference measurement for a symmetrically-duplicated waveguide analysis;
2) provide a sample vapor in thermodynamic equilibrium with a liquid phase;
3) measure the sample vapor absorbance;
4) calculate the activity coefficient of each component of the mixture by:

   a) dividing the measured sample absorbance by the absorbance of pure solvent;
   b) dividing the value calculated in step a) by the theoretical activity coefficient for an ideal solution; the activity coefficient being equal to the value obtain in step b.

**Brief description of the drawings**

Other features, aims and advantages of the invention will become apparent from the following description, which is purely illustrative and non-limiting, and must be read with reference to the appended drawing wherein:

- Figure 1 represents a section view of the apparatus of the invention,
- Figure 2 represents a top view of the fluidic part,
- Figure 3a represents a simplified perspective view of the apparatus,
- Figure 3b represents a simplified sectional view of the apparatus wherein the input and the output channels are situated under the membrane surface,

- Figure 4a represents a perspective view of the analytical part,
- Figure 4b represents a perspective view of an example of waveguide,
- Figure 5a represents a section view of the apparatus of the invention comprising an interconnection part,
- Figure 5b represents a section view of the apparatus of the invention comprising an interconnection part which includes a support layer,
- Figure 6 represents a top view of the interconnection part,
- Figure 7a, 7b and 7c represents a section view of an interconnection part having several apertures for one void volume (Fig. 7a), two apertures per void volume for multiple void volumes (Fig. 7b) and one aperture per void volume for multiple void volume (Fig. 7c).
- Figure 8 presents simulation experiment results giving the transmitted fraction of light with regard to the aperture fraction of the interconnection part,
- Figure 9a presents the evolution of water peak integral measured by infrared gas phase spectroscopy varying the NaCl concentration in a water-NaCl solution versus the acquisition time at a temperature of 25°C,
- Figure 9b presents a comparison of the evolution of the activity coefficient of water in function of the NaCl concentration at 25° C using the apparatus of the invention and the apparatus of Robinson et Stokes,
- Figure 10 presents a comparison of the evolution of the activity coefficient of ethanol in function of ethanol concentration in water-ethanol solution using the apparatus of the invention and the apparatus of O'Hare *et al.*
- Figure 11 presents the evolution of pure dodecane and a binary mixture of dodecane and 100 mM of TODGA (N,N,N',N'-Tetraoctyl Diglycolamide peak integrals measured by infrared gas phase spectroscopy versus the acquisition time at a temperature of 20°C.

## Detailed description

### A. Design

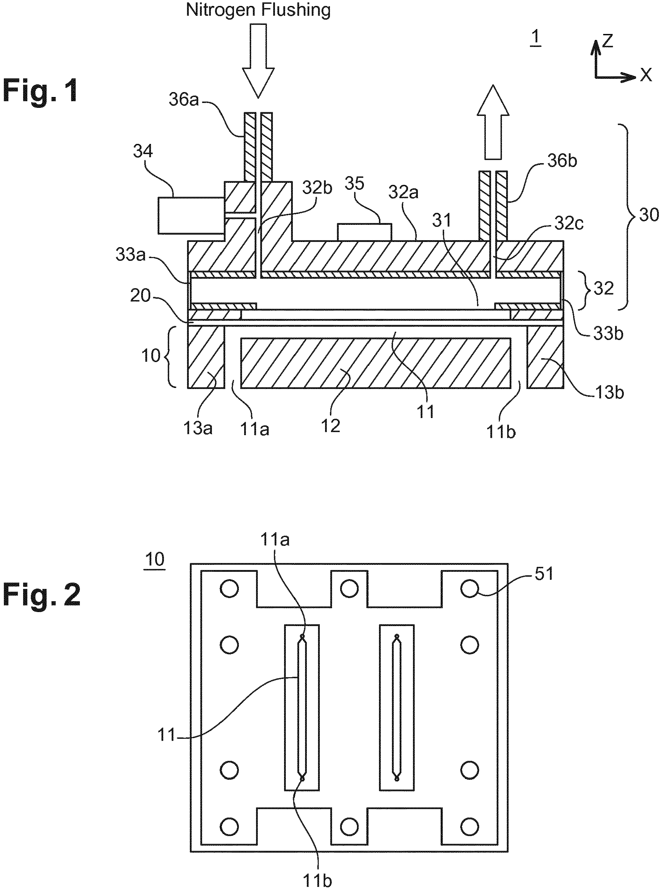

With reference to FIG. 1, an apparatus 1 is represented comprising a fluidic part 10, an analytical part 30 consisting of a substrate-integrated hollow waveguide (iHGW) and a permeable membrane 20 interfacing both parts. The overall assembly is sealed from the ambient atmosphere.

The use of the apparatus 1 is non-limited to liquid samples, so that gases or gas mixtures can also constitute samples to be analyzed. The sample may be a binary liquid-vapor sample. The liquid may be a solution comprising at least one solvent and one analyte. The analyte may be completely dissolved in the solvent, so as to form a solvent-analyte mixture that consists in a single phase. The analyte may be an emulsified micro-emulsion, i.e., a single isotropic and thermodynamically stable nanostructured solution of two immiscible components stabilized by a third component, a surfactant or a surfactant/co-surfactant mixture. For binary liquid-vapor sample, the liquid sample may consist in a mixture with up to ten components including, but non-limited to, organic solvents, water or alcohol.

The fluidic part 10 comprises a sample channel 11 intended to receive the sample. The sample channel 11 may be defined by the compact area delimited by portions 12, 13a and 13b of the fluidic part, and at the upper end by the permeable membrane 20. The fluidic part 10 has a volume, $v_{fp}$, which is comprised between 1 pL and 1 L, preferably between 10 to 100 $\mu$L. In addition, for a rectangular cross-sectional shape, it may have a length, l, defined along x axis, which may be comprised between 1 mm and 100 mm, preferably between 10 mm and 10 mm, a width, w, defined along y axis, which may be comprised between 1 $\mu$m and 10 mm, preferably of about 2 mm and the height, h, defined along z axis, may be comprised between 1 $\mu$m and 10 mm, preferably of about 0.5 mm. The length, l, is defined as the distance between the vertical end surface of portion 13a and the one of portion 13b. The height, h, is defined as the distance between the lower end surface of portion 13a and the permeable membrane 20. Liquid sample is initially situated in a reservoir (not shown) in fluid communication with the sample channel 11. The liquid sample is able to flow through the sample channel 11 due to a pressure gradient already in existence, or generated by, e.g., an external pressure pump (not shown). For this purpose, the sample channel 11 extends between an input 11 a and an output 11 b, respectively, in fluid communication with the reservoir and the external pressure pump, as shown in FIG. 1. Furthermore, the fluidic part 10 is preferably made of PMMA (See section B).

The setup may be duplicated symmetrically in order to perform differential measurement with one device, or parallelized measurements on two different chemical systems (FIG.2). Furthermore, the setup may be adapted by including three or more collinear channels to enable several parallel measurements. Moreover, it might also be considered using a sample channel 11 having two membranes, for instance one at the upper end of portion 13a and 13b and the other at their lower end, so as to make a sandwich like device i.e. waveguide/membrane/liquid channel/membrane/waveguide. In such a case, the sample channel 11 configuration would be modified, for instance by using an input 11 a and an output 11 b oriented along x-axis, to enable vapor phase access both waveguide/membrane parts.

As generally stated, two systems are in thermodynamic equilibrium when they have the same temperature, the same pressure, the same chemical potential, when all forces are balanced between them and are not subject to external driving force. For a system with controlled temperature and pressure, the ability to evolve toward thermodynamic equilibrium can be predicted by the change in Gibbs free energy (G), defined as:

$$G = U - TS + PV \qquad \text{(Eq. 1)}$$

wherein P is the pressure (given in Pascal, Pa); T is the temperature (given in kelvin, K); U is the internal energy (given in Joule, J); S is the entropy (given in Joule) and V is the volume. For any change in state, the Gibbs energy change for a process is defined as:

$$\Delta G = \Delta U - T\Delta S + PV \qquad \text{(Eq. 2)}$$

Gibbs free energy is a thermodynamic potential reflecting the maximum useful and reversible work achievable by a system on the surroundings when a process occurs at constant temperature and pressure. This maximum work is concomitant with a decrease of the internal energy of the system, which part not extracted as work is exchanged with the surroundings as heat ($T\Delta S$). Thus, for a system with controlled temperature and pressure, thermodynamic equilibrium is reached when the Gibbs free energy, G, is minimized and $\Delta G = 0$.

For a liquid vapor system, the establishment of thermodynamic equilibrium depends on the ability of species to achieve their phase transitions. At equilibrium, the chemical activity is the same on both sides of the interface and can be expressed in terms of vapor pressure (which is equal to fugacity). Thus, if the solution consists of an ideal mixture of components, the chemical activity of each component can be expressed in terms of partial pressure. Further, as generally stated by Raoult's law, the partial pressure of each component of the vapor phase is proportional to its concentration (i.e. mole fraction) in the liquid phase depending on temperature. For a mixture with two components A and B, Raoult's can be defined as:

$$P_{\text{liquid phase}} = P^{\circ}_A \chi_A + P^{\circ}_B \chi_B \qquad \text{(Eq. 3)}$$

where $P_{\text{liquid}}$ phase is the pressure of the mixture of components, $P^{\circ}_A$ and $P^{\circ}_B$ are the vapor pressures of pure components A and B, $\chi_A$ and $\chi_B$ are respectively the molar fractions of pure components A and B. Thus, the proportionality parameter is the vapor pressure of the pure component. For non-ideal mixtures, the difference of chemical coefficients from unity represents the deviation from Raoult's law, which can be measured at thermodynamic equilibrium. This is applicable for the analyte as well as for the solvent.

The apparatus 1 allows the measurement of activity coefficients of components from ideal to non-ideal sample solutions. In particular, the fluidic part design and sample channel/membrane interface play a role in the establishment of thermodynamic equilibrium. Indeed, by decreasing the volume of the fluidic part 10 the sample amount required to perform the sample measurement decrease in the same way. Concomitantly, the more the surface exposed to the analytical part increases the more sample evaporation rate increases. Thus, to promote rapid establishment of thermodynamic equilibrium, the fluidic part 10 may preferably have a high aspect ratio i.e. a high evaporating surface and a low volume. Both parameters are inherently limited by the fabrication technique used (see section B).

The sample composition may also be taken into account to determine the fluidic part design. Indeed, if the sample consists in a mixture of an evaporating solvent and a non-evaporating reagent, a key parameter is the ratio of the fluidic part volume to the waveguide volume. For instance, if the waveguide comprises 1 mL of an evaporating solvent, the complete evaporation of the vapor would require the use of 1 µL of liquid (rule of thumb). To avoid any tampering of the sample composition, the evaporated solvent volume should not exceed 1% of the sample volume, leading to a fluidic part volume of at least 100 µL in this. To reduce the fluidic part volume the sample may be constantly perfuse into the fluidic part 10 to compensate the loss of solvent.

The permeable membrane 20 may be defined as a three-dimensional material having one of its dimensions smaller than the other dimensions and comprising a pore network. Preferably, the membrane 20 may be configured in such manner that it closes fluidic part 10 at its upper end, so that the lower surface 21 of the membrane 20 faces the fluidic part and the upper surface 22 of the membrane 20 faces the analytical part 30.

The "permeability" character of the membrane 20 is given by its ordinary meaning, which is the intrinsic property of a membrane consisting in the ability of a gas to pass through the membrane 20. Fundamentally, the membrane 20 must be considered as a porous medium enabling permeation of vapor phase molecules into the analytical part 30. Thus, at equilibrium, chemical activity coefficients of each component are the same on both sides of the membrane 20, i.e. on the fluidic part 10 side and on the analytical part 30 side.

Another fundamental aspect of this invention is the ability of the membrane 20 to confine the liquid-vapor interface within the sample channel 11 and to prevent liquid to diffuse into the analytical part 30. The permeable membrane 20 is defined by its physical properties, namely its thickness, its porosity, its tortuosity, its pore size, and also by its chemical properties. For instance, the polarity of membrane 20 defines the membrane's hydrophobic nature. An appropriate choice of membrane properties enables vapor to diffuse into the analytical part 30 and maintains the liquid in the sample channel 11, thus causing a certain amount of hydrostatic pressure difference between the sample channel 20 and the analytical part 30.

After evaporation, the time required for the diffusion of vapor molecules through membrane 20 into the analytical part 30 depends on the membrane physical parameters. This can be further understood applying Fick's law of diffusion for porous media:

$$T = l_m^2 \cdot t/(D \cdot p) \qquad \qquad (Eq.\ 4)$$

wherein T is the diffusion time (given in seconds, s); $l_m$ is the thickness of the membrane (given in meters, m); t is the tortuosity of the membrane (dimensionless); D is the diffusion coefficient and represents the diffusivity of the vapor molecules in the membrane (given in square meters per second, $m^2/s$) and p is the porosity of the membrane (dimensionless). The entire membrane parameters are described thereafter.

From Eq. 4, the effective diffusivity, $D_{eff}$, of vapor molecules in the membrane can be defined as:

$$D_{eff} = p \cdot D/t \qquad \qquad (Eq.\ 5)$$

Indeed, $D_{eff}$ ($m^2/s$) is proportional to the membrane porosity, p, and is inversely proportional to the membrane tortuosity. From this, the diffusion time expression can be simplified:

$$T = l_m^2/D_{eff} \qquad \qquad (Eq.\ 6)$$

Therefore, the diffusion time depends on the membrane thickness, $l_m$, and the effective diffusivity, $D_{eff}$.

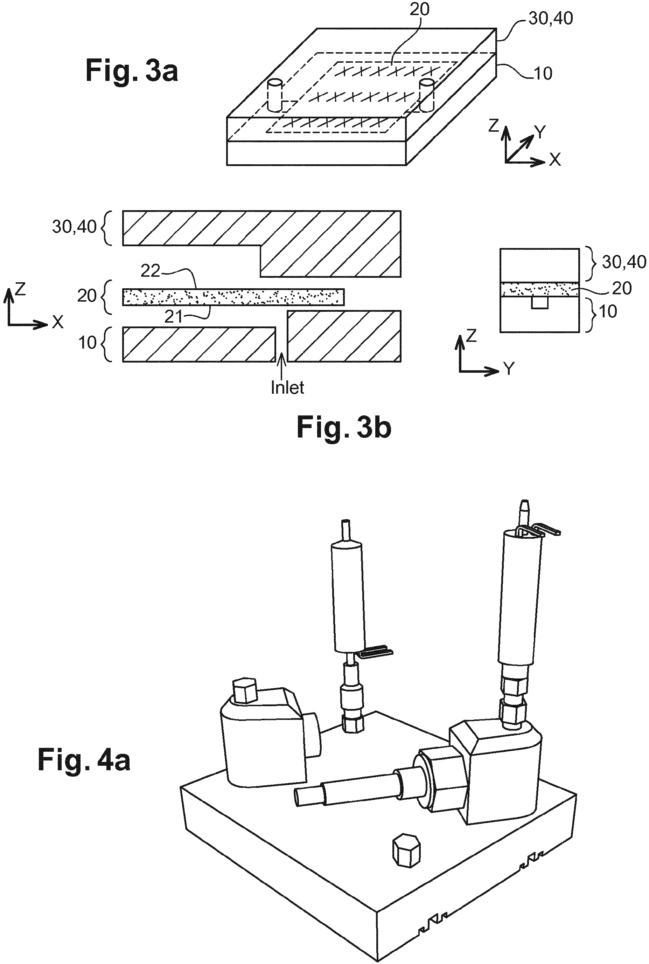

The thickness, $l_m$, of the membrane 20 is defined as the distance between its lower face 21 and its upper face 22 (FIG. 3b). From Eq. 4, the membrane 20 must be as thin as possible to minimize diffusion time. However, the membrane 20 must be thick enough to enable its insertion in the device without endangering its physical integrity. Advantageously, the membrane has a thickness between 1 nm and 1 mm, preferably between 1 $\mu$m and 100 $\mu$m. If the membrane thickness, $l_m$, becomes too small to be easily integrated into the system, a supporting substrate, such as a thin metallic grid or mesh, can be used. A suitable metallic grid is described in the US Patent n°8,361,321 B2. The membrane 20 may also be laminated with a second membrane of the same material with higher thickness and bigger pores in order to ensure its stabilization and handling of the membrane physically.

The tortuosity, t, of the membrane 20 is defined as the ratio of the length of the "tortuous" path in the membrane divided by the straight line value. Indeed, in a porous membrane the path length for diffusion is at least as long as the shortest path between two points as in the case of a continuous medium. In other terms, assuming the pore space of the membrane to be completely filled with diffusion paths, the tortuosity defines the way the diffusion paths wind through the pore space. From Eq. 4, the membrane tortuosity, t, must be as low as possible to decrease the diffusion time, i.e., the main diffusion paths must be as parallel as possible with the vapor flow permeating the membrane 20. Advantageously, the membrane 20 has a tortuosity between 1 and 5.

The porosity, p, of membrane 20 is defined as the ratio of the volume of void-space to the total volume of membrane 20. Otherwise stated, the porosity, p, represents a quantification of the amount of space available for the gas within membrane 20. For instance, in a homogeneous and isotropic membrane, the pore volume is the same through the membrane, i.e. the porosity is constant. From Eq. 4, the membrane porosity, p, must be as high as possible to decrease the diffusion time and increase vapor diffusion across membrane 20. In the same time, the porosity, p, must be optimized with regard to the liquid-vapor interface stability since the porosity affects it. Further, the interface stability to hydrostatic pressure is inversely proportional to the porosity and proportional to liquid-vapor interfacial tension. Thus, a particular attention should be paid to this parameter in order to ensure establishment of thermodynamic equilibrium, and even more for maintaining this equilibrium. Advantageously, the membrane 20 has a porosity between 0.5 (50%) and 0.95 (95%), preferably between 0.55 (55%) and 0.95 (95%), more preferably between 0.7 (70%) and 0.95 (95%).

In particular, the macroscopic features of the membrane 20, i.e. pore size, pore distribution and pore shape, define whether the liquid is able to cross the membrane. It needs to be adapted so as to prevent liquid diffusion into the analytical part 30. The pore size of membrane 20 is defined as the diameter of its pores. Preferably, the pore size is constant within the membrane. The suitable pore size may be adapted to the liquid to be analyzed. Pore size needs to be larger than the diameter of the gas molecules to be analyzed to allow gas molecules to diffuse across the membrane 20. Pore size must be as large as possible to increase diffusion. Advantageously, the membrane 20 has a pore size between 1 nm to $1\mu$m, and preferably between 1 nm and 100 nm, for instance between 10 nm and 100 nm. The pores of membrane 20 may be randomly distributed or homogeneously distributed within the membrane volume. The pores of membrane 20 may have various shapes, for example, spherical, cylindrical, arbitrary, etc.

The choice of the membrane material influences 1) the chemical resistance and 2) the ability to hold the liquid phase within the sample channel 11. To maintain the liquid inside sample channel 11, i.e., to prevent liquid perfusion into the analytical part 30, the Laplace pressure needs to be higher than the hydrostatic pressure existing between the liquid phase and the vapor phase. The membrane material may be adapted with regard to these considerations. Furthermore, as the physical parameters of the membrane material may change with regard to the sample solution to be analyzed, the physical parameters of membrane 20 may be further adapted according to the membrane material.

Furthermore, interactions between the vapor phase molecules and pores can occur depending on the ability of the gas molecules to be absorbed on the pore network. Membrane 20 may have separation properties, so as to enable size or charge exclusion, filtration and chromatography depending on the pressure inside the apparatus 1. For instance, assuming the analyte is a complex liquid matrix, a membrane 20 with a suitable polarity could be employed in such manner that only some specific molecules pass through it, thereby reducing the complexity of the vapor phase in comparison to the solution and simplifying the analysis of such a gas phase.

Membrane 20 may also be adapted to have reactive properties, for instance to achieve chemical reactions such as derivatizations, reduction-oxidation or catalysis. The membrane material itself may present such properties or it may be functionalized. One could refer for example to E. Curcio, and E. Drioli. "Membrane Distillation and Related Operations-A Review", Separation & Purification Reviews 34, 1, 2005, pages 35-86. Advantageously, membrane 20 is an oleophobic and/or hydrophobic membrane made of polytetrafluoroethylene (PTFE, see section B).

Analytical part 30 is advantageously an enclosed substrate-integrated hollow waveguide 32, for instance as described in US20130081447A1, section [0037] and [0096], which presents overall dimensions matching/adjusted to those of fluidic part 10 and permeable membrane 20, i.e. the length, l, and the width, w, of analytical part 30 are preferably identic to those of fluidic part 10. It might also be interesting that waveguide 32 has smaller dimensions than the fluidic part 10 in order to enhance evaporation while measuring highly absorbing molecules. A size-variable waveguide 32 may also be considered to measure highly absorbing, high-concentrated analytes (short waveguide position), and low absorbing and/or low-concentrated analytes (long waveguide position). In such a case, the fluidic part 10 and the waveguide 32 would not have the same dimensions.

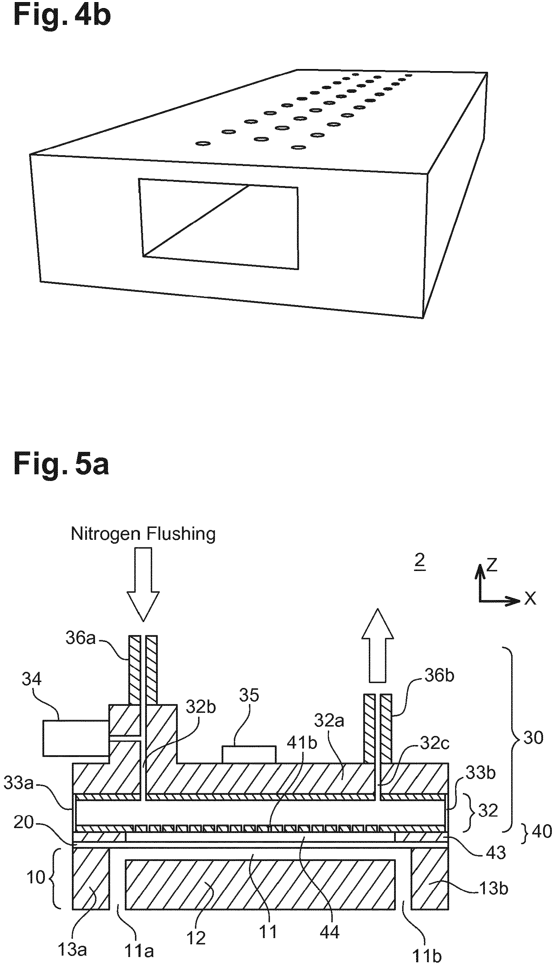

With reference to FIG. 4a, a perspective view of an exemplary analytical part 30 is disclosed. Analytical part 30 consists of a waveguide 32 having, for example, a rectangular cross-section of 2.1 mm x 2 mm. The waveguide 32 dimensions may be adapted with regard to the quantity of absorbing molecules. Waveguide 32 may comprise inlet ports 32b and outlet ports 32c to enable gas sample through flow. Waveguide 32 (see FIG.1) comprises at its lower end an open portion 31 allowing diffusion of the vapor phase emergent from fluidic part 10. This open portion 31 interfaces permeable membrane 20 and waveguide 32, so that the pathway of vapor phase molecules from sample channel 11 to waveguide 32 is minimized.

The analytical part 30 is equipped with pressure sensors 34, temperature sensors 35a, humidity sensors 35b, or combined temperature/humidity sensors 35 to monitor the ambient parameters. Further means to keep these parameters constant over a given amount of time and to at least increase the temperature within the device must also be included in the analytical part 30. The analytical part 30 may further comprise openings sealed by valves, preferably solenoid valves (36a, 36b), and may be connected to means such as, e.g., a nitrogen purging gas system (not shown) and any non-IR active gas, e.g. $O_2$, Ar, He, $CO_2$-free dry air can be used, allowing purging of the vapor phase between two measurements and for blank measurements. The analytical part 30 may consist of two distinct waveguides 32 allowing differential or simultaneous measurements.

The waveguide volume, $v_{ac}$, may be minimized in order to minimize the time for reaching saturation vapor pressure. This allows reaching thermodynamic equilibrium as quickly as possible. However, the sensitivity of the device depends not only on the waveguide length, but also on the absorption characteristics of the vapor phase molecules. Indeed, the system noise (throughput) is dependent on the cross section and larger cross section leads to less reflections, less losses, higher throughput, stronger signal at the detector, less noise, and hence waveguide volume. Thus, the waveguide 32 may have a volume sufficiently high to ensure proper measurements. Advantageously, the waveguide 32 has a volume, $v_{ac}$, of at least 50 $\mu$L, and less than 2 mL, preferably of about 220 $\mu$L.

The height, h, of the waveguide 32 may also be used to adjust the equilibration time. Considering the volume, $v_{ac}$, constant, the height, h, must be minimized to speed up the establishment of thermodynamic equilibrium and reduce the equilibration time. Furthermore, there is a compromise to be made with regard to the throughput. Indeed, the throughput is maximized (i.e., the least number of reflections) if the cross-section is a square. Also, light emitted from a waveguide being very wide but flat (i.e., high aspect ratios) cannot be effectively focused on a square detector element. The overall geometry of the analytical part 30 can be further adapted with regard to the final utilization of the device, for example, for major, minor, or trace element analysis (See section D).

To achieve optical analysis such as infrared gas phase spectroscopy, the waveguide 32 may 1) guide the light from the excitation source to the incoupling facet 33a, 2) minimize the optical power loss and 3) increase the signal/noise ratio of the measured signal. Optical analysis can be performed in various ways and using various techniques. Most of these techniques allow fast, non-invasive, continuous analysis of various substances, multi-component matrices and media under various surrounding conditions and could be coupled with the apparatus 1. Generation of the incoming light may be based on, for example, luminescence, Raman scattering or light absorption mechanisms. In the case of absorption spectroscopy, the amount of light absorbed inside the analytical part 30 varies in function of, for example, the nature and the concentration of the analyte. Otherwise stated, any change in the amount of light absorbed reflects a modification of the analyte. Examples of potential applications are provided in section D.

Detection can take place inside or outside of analytical part 30 and various types of optical equipment may be appropriately selected to achieve detection. For this purpose, the analytical part 30 may be sealed by means of one or two optical windows, bandpass filters, optical lenses, mirrors (e.g. for Cavity ring-down spectroscopy) or sensor equipment (e.g. integrating spheres) obstructing its openings. For instance, the analytical part 30 may be sealed by an optical window at one any of the incoupling and the outcoupling facets 33a/33b and have a narrow bandpass filter on the other, which enables direct coupling/interfacing of waveguide 32 to a thermal radiation source (blackbody radiator). Windows may be entirely omitted and coupling with LED, or IR-LED may be considered.

For outside detection, an infrared (IR) excitation source may be provided externally and the light directed from this excitation source, e.g. a coherent, a monochromatic or a polychromatic beam, a collimated or diverging beam, etc. to waveguide incoming facet 33a. In certain cases, some optical means (mirrors, Winston cones, etc.) may be used to enable coupling light into analytical part 30. Advantageously, incoupling and outcoupling facet 33a and 33b of waveguide 32 may consist of two IR-transparent barium fluoride ($BaF_2$) windows having a thickness of 500 $\mu$m, so that when the light reaches the windows it passes through without significant optical losses, i.e. about 6% of loss for 2-11 $\mu$m radiation, then around 10-20% from 11 $\mu$m and higher. Indeed, $BaF_2$ presents excellent transmittance for IR and long-IR wavelengths. But, other common IR transmitting optical window materials such as, e.g., zinc selenide (ZnSe), calcium fluoride ($CaF_2$), sodium chloride (NaCl), potassium chloride (KCl), cesium iodide (CsI), potassium bromide (KBr), thallium bromide / thallium iodide (KRS-5), silicon (Si), germanium (Ge), or zinc sulphide (ZnS), or materials currently under development or to be developed in the future can be used. Further, appropriate means for detecting the outgoing light, i.e., light passing through outcoupling facet 33b, may also be provided, among which photodiodes, photoconductors, or photoacoustic spectroscopy, etc. Preferably, outside detection is performed using Fourier Transform Infrared Spectroscopy (FTIR). This method offers several advantages in terms of spectral quality, data collection speed, ease of use and reproducibility of data. In particular, this method enables multiplexed measurements leading to an improvement in signal-to-noise ratio and in acquisition time. In practice, all wavelengths can be measured simultaneously (Fellgett advantage). The method also offers improvements in terms of limiting throughput (Jacquinot advantage), wavenumber accuracy (Connes advantage) and allows no or negligible stray light, in comparison to dispersive instruments.

For internal detection, waveguide 32 may include, at its proximal end, for example instead of outcoupling facet 33b, an optical sensor or an optical analyzer (e.g. photodiode) enabling analysis of the light coming from the waveguide. Thus, other means such as, for example, a computer may be also provided to collect and process the data received by detection means.

To minimize optical losses inside waveguide 32, its surface may be optionally polished to a mirror-like finish to obtain high reflective surfaces. In particular, in the case of mid-infrared radiation absorption spectroscopy measurements, the root mean squared surface roughness of the analytical part walls may be about 100 nm or lower. Preferably, the inner walls of waveguide 32 are made of a material 32a which is highly reflecting to IR radiations, for example $AlMg_3$ alloy. Other suitable materials such as aluminum (Al), aluminum alloys, gold (Au) or silver (Ag) can be selected to enable high reflectivity of the infrared light on the analytical part walls. Au may be used for mid-IR and Al and Ag to transmit visible light. Moreover, IR reflectivity may be enhanced by using, for instance, metal plating of coating, electrodeposition or vapor deposition.

Advantageously, the geometry of analytical part 30 may be adapted to reduce optical losses in function of the optical path length desired. For this purpose, analytical part 30 may be designed to enable light entering waveguide 32 having minimum interactions with the waveguide walls, even though its geometrical parameters, especially its length, I, must be chosen with regard to the other design parameters, e.g., the fluidic part 10 dimensions or the maximum acceptable footprint of apparatus 1. Indeed, assuming all other geometrical parameters constant, especially aspect ratio, r, increasing optical length leads to an increased number of reflections within waveguide 32 and to an increased attenuation. But, various designs can be employed, for example, the waveguide may be straight, folded, curved, meandered, etc., thus featuring different optical path lengths without varying the volume, $v_{ac}$, of analytical part 30 or footprint of apparatus 1. For this purpose, one could refer, for example, to US application n° 2013/0081447 A1.

It is also an object of the present invention to allow analytical part 30 to have specific properties depending on the detection principle. For instance, in the case of radiation absorption spectroscopy, the analytical part walls may require a high reflective index regarding the wavelengths in use.

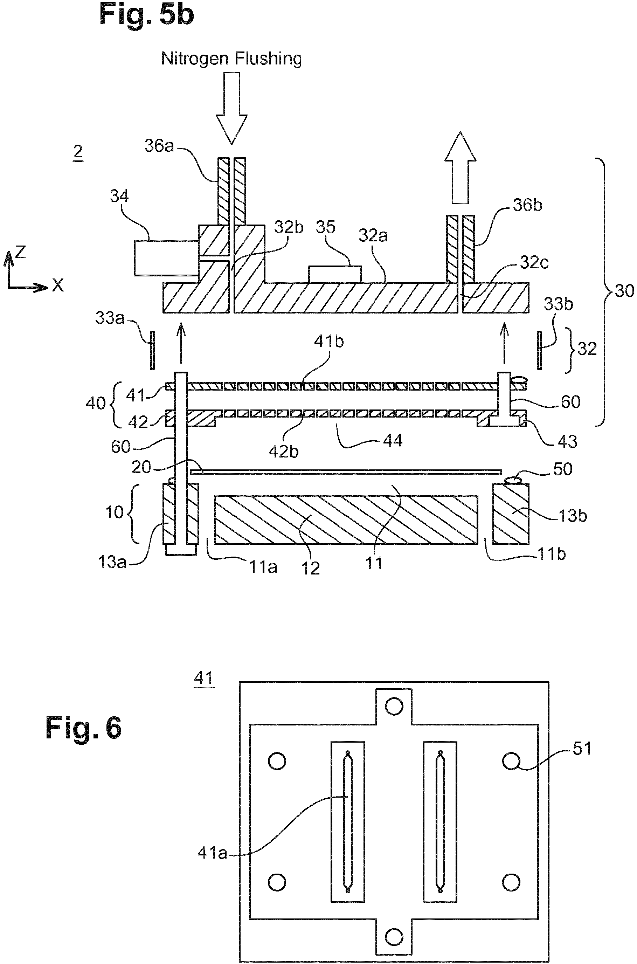

Thus, in another embodiment of the invention (FIG. 5a), the waveguide open portion 31 may be closed by an interconnection part 40. Preferably, interconnection part 40 may be situated at the interface between permeable membrane 20 and analytical part 30. With reference to FIG. 5a, 5b and 6, interconnection part 40 consists of a layer 41, preferably having the same dimensions (i.e. length, l and width, w) as the fluidic part 10, and two spacers 43 located at the distal ends of interconnection part 40, being in direct contact with the permeable membrane 20, so that a volume, $v_{ip}$, free of material, i.e. a void volume 44, is created between interconnection part 40 and membrane 20.

Layer 41 may be arranged in such manner that it faces analytical part 30. Layer 41 comprises a vapor cell 41 a with small apertures 41 b of 1 $\mu$m to 2 mm in diameter in case of circular apertures, preferably between 0.1 mm and 0.5 mm. Apertures 41 b may be uniformly distributed or not within layer 41. The number N of apertures 41 b (N being an integer) of the layer 41 lies in the range 1-500, preferably in the range 2-100, more preferably at least two per void volume 44. The number N of apertures 41 b of layer 41 is chosen so that the additional losses (i.e., additional attenuation) induced by the presence of the holes must not account for more than 90%, preferably less than 50%, more preferably less than 25%, even more preferably less than 10% as compared to an identical device with identical incoupling beam conditions, but without holes (N = 0). Holes 41 b of layer 41 may have various shapes, for example square, triangular or rectangular. Preferably, they have a circular shape.

The aperture size of apertures 41 b depends on either the waveguide dimensions or the aperture configuration. For instance, for circular apertures 41 b, the maximum aperture size corresponds to the size of the waveguide 32 (i.e., width 2mm), while for non-circular apertures (e.g., rectangular), apertures 41 b may be arranged alongside the optical path, where the limit is the length of the waveguide 32. For a meandered or interconnected "aperture" structure, there is no limitation in size.

Assuming identical aperture fraction, the aperture size does not have effect on the optical loss in the waveguide and the throughput (i.e. system noise). But, the aperture size affects diffusion kinetics with the device.

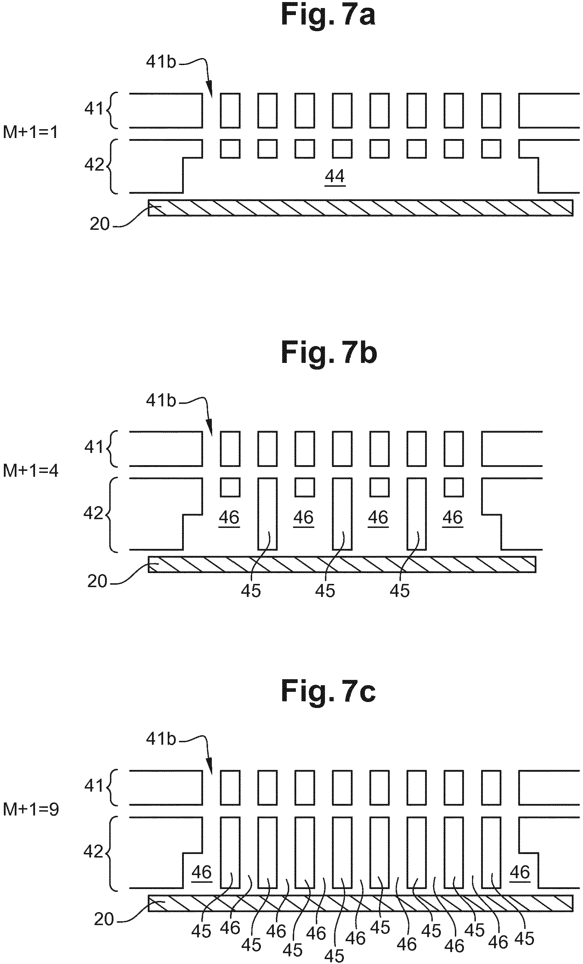

For instance, a layer 41 with a single big hole would speed up diffusion from fluidic part 10 into waveguide 32. However, longer diffusion paths and longer time would be required to get the gas uniformly distributed within the waveguide 32 (i.e. along its length). Moreover, if the interconnection part 40 has several separate void volumes 46 (FIG. 7a, 7b and 7c), each one of them needs at least one aperture 41 b. When flushing, it might be advantageous to have at least two apertures per void volume 44, 46, in such manner that the flushing gas stream can enter the void volume 46 through the first aperture and leave it through the second aperture. If there is only one aperture, the flushing gas would have to enter into waveguide 32 and leave it through that same aperture. Such a configuration either leads to very long flushing time or causes the gas stream to flow through the waveguide 32 only, thereby does not allow flushing the void volume 44, 46.

Rather, in the case of a layer 41 having several small apertures, slower diffusion through the apertures and shorter diffusion paths within the waveguide 32 are expected. Thus, faster achievement of uniform gas concentrations would occur within it. Furthermore, flushing of the void volumes may be faster than with only one or two apertures per void volume 44. A particular attention should also be paid to very small apertures. Indeed, in such a case, as the gas escapes through an aperture size considerably smaller than the mean free path of the molecule, gas exchange will be based on effusion rather than diffusion. A configuration promoting effusion should preferably be avoided since molecules may only pass through the aperture one after the other, which significantly increases equilibration time.

Moreover, considerations similar to those applying to membrane permeation properties can be apply to those of the interconnection part. Thus, a small aperture fraction enables less optical losses, higher throughput but slower diffusion rate and equilibration. Furthermore, assuming the same aperture fraction, distinction should be done between a low number of holes and a high number of holes within layer 41.

Advantageously, layer 41 is a 20 $\mu$m-thick aluminum layer adapted to reflect IR radiation. Other materials reflecting IR light may be appropriately selected.

With reference to FIG. 5b, the interconnection part 40 may optionally comprise a rigid support 42 for layer 41 to prevent any deformation of layer 41, which could lead to a modification of IR signal and to non-reproducible data. Source of deformation of the layer 41 can be humidity, temperature or pressure variations (e.g. due to purging with nitrogen) causing it to flutter, vibrate or undergo inelastic deformation. Moreover, either excess pressure from purging or gravity itself may cause « denting » or other permanent deformation of layer 41. Advantageously, the rigid support 42 may be made of PMMA (See section B).

The rigid support 42 comprises a vapor cell 42a with small apertures 42b of about 0.4mm in diameter in case of circular apertures, preferably 1 $\mu$m to 2mm. Apertures 42b may be uniformly distributed or not within the rigid layer 42. Advantageously, the aperture size of apertures 42b is larger than in layer 41, in order to facilitate layer alignment, and to increase the diffusion rate. The number M (M being an integer) of apertures 42b of the rigid support 42 lies in the range 1-500, preferably in the range 2-100, more preferably at least two per void volume 44. The number of apertures 41 b may be equal to the number of apertures 42b. Apertures 42b of the rigid layer 42 are superimposed with apertures 41 b of layer 41 to enable vapor diffusion from the sample channel 11 into waveguide 32. If the interconnection part 40 has several separate void volumes 46 (FIG. 7a, 7b and 7c), it may comprise at least as much intermediate spacers 45 to delimit each of the void volumes 46 while increase the rigidity of layer 41.

All considerations applying for apertures 41 b of layer 41 in terms of permeation properties also apply for apertures 42b of rigid layer 42. However, the optical properties of rigid layer 42 are not critical parameters such as those of layer 41. Indeed, only layer 41 faces the other walls of waveguide 32. Advantageously, the void volume, $v_{ip}$, of the interconnection part 40 is about 240 $\mu$L.

Moreover, the two spacers 43 may preferably be adjacent to the vapor cells 41 a, 42a of layer 41 and rigid support 42, so that they do not interfere with the gas flow coming from sample channel 11 and membrane 20. Thus, the void volume 44, $v_{ip}$, left between interconnection part 40 and membrane 20 is such that the evaporation process is hastened for high surface-to-volume ratio of membrane 20 to the interconnection part 40.

The interconnection part setup may be duplicated symmetrically in order to perform differential measurement with one device, or parallelized measurements on two different chemical systems. Furthermore, the setup may be adapted by including three or more collinear interconnection part to enable several parallel measurements. In the case of a sandwich like device, the interconnection part 41 may also be duplicated so as to form a stack waveguide/interconnection part/membrane/liquid channel/membrane/interconnection part/waveguide.

Moreover, in one aspect of the invention, membrane 20 can be covered in at least a monolayer of liquid. In this case, layer 41 may come in direct contact with membrane 20, in such manner that capillary forces can drive the liquid through holes 41 b and cover the inside (reflective) layer of the waveguide 32. Consequently, liquid will be measured alongside with the gas phase. This is undesirable, and must be prevented under all circumstances. The void volume 44 of the interconnection part 40 prevents such undesirable effect to occur.

Some radiation might reflect off the wetted membrane (which would then be directly underneath the holes of layer 41) right back into waveguide 32, and eventually reach the detector. Such radiation would also have sampled the liquid instead of the gas, giving rise to a combined detected signal. In order to prevent such an effect, it must be ensured that all probing light either does not reach the membrane or any other potentially wetted surface, or does not reach the detector. The void volume 44 allows avoiding this undesirable effect.

Similarly to the membrane thickness, $l_m$, the interconnection part thickness, $l_{ip}$, may be used as control parameter of the diffusion time. Thus, the interconnection part 40 may be as thin as possible to decrease diffusion time and consequently, the equilibration time.

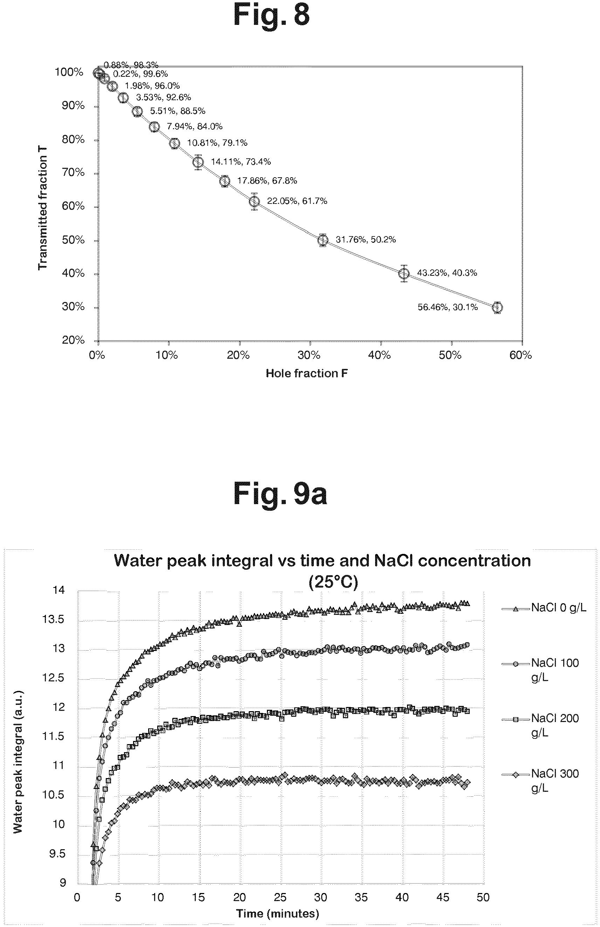

With reference to FIG. 8, simulation experiment results giving the evolution of the transmitted fraction (abscissa) in function of the aperture fraction (ordinate) of the interconnection part 40 were performed. For this simulation, a straight waveguide having a rectangular cross-section and dimensions of 53.98 mm x 2.10 mm x 2.00 mm (lxwxh) was considered. Layer 41 consists in one perforated wall of the waveguide with a centred grid of quadratic holes having a side length $a_i$; a grid spacing 500 $\mu$m in both directions; and an aperture fraction, $F_i(a) = 400a_i^2\, l^{-1}\, w^{-1}$. All walls were defined as ideal mirrors (i.e. 100 % reflecting). Defining layer 41 and walls as 100% reflective allows simulating the excess loss caused solely by the presence of holes for an ideal case. The light source (circular; diameter d = 0.1 mm) is located at the proximal end of the waveguide and consists in a divergent beam (divergent angle, $2\theta = 40°$) having a number $i_0$ of inserted rays. The detector is represented by a screen located at the distal end of the waveguide. The number of transmitted rays is denoted $i_i(F)$ and the transmittance $T_i(F) = i_i i_0^{-1}$. The uncertainty on the simulation was estimated as $\sigma_T = [i_0 \cdot T \cdot (1-T)]^{0.5} \cdot i_0^{-1}$. Within the simulation experiments, the individual launch angles and directions of the rays emitted by the light source are statistically distributed, ranging from $\theta_{min} = 0°$ (i.e. rays parallel to the optical axis) to $\theta_{max} = \theta$. This approach allows approximate mimicking a diverging beam that would result from focusing almost collimated radiation, outcoupled from the spectrometer, into the analytical part via an off-axis parabolic mirror.

The largest simulated aperture fraction i.e. 56.46% results in a transmittance higher than 30%. The maximal free path length, $L_{fp}$, of a ray - propagating on any plane perpendicular to the perforated wall and parallel to the optical axis - emitted at $\theta$ is $L_{fp} = H \cdot \tan(\theta) = 5.5$ mm. Hence, such a ray hits the perforated wall every 11 mm, and, thus, needs at least 4 reflections off this wall for exiting the analytical part, resulting in a transmission probability of only about 56.46%, corresponding to 10 %. This estimated value is significantly lower (by a factor of 3) than the simulated transmittance. However, this exemplary ray resembles the "worst case" scenario; the majority of the rays are emitted with cone angles less than $\theta$, and therefore experience less than 4 surface contacts with the perforated wall. In the optimum case, considering emission parallel to the optical axis, rays make no contact with the perforated wall at all. As specified above, an acceptable aperture fraction, $f_{41}$, corresponds to the value giving the excess optical losses below 20%. Such value is achieved with a 10% aperture fraction according to simulation data.

The "optimal" acquisition time and the signal transmitted may be adjusted as a function of the design parameters. The acquisition time is the time needed to measure a single, for instance FTIR, spectrum, and depends on the (preset) number of co-added scans, the spectral resolution, and the wavenumber interval to be scanned. Moreover, it strongly depends on the sampling method used (e.g. photoacoustic spectroscopy). Spectrum acquisition usually starts after equilibrium is reached, except in the case of using the device is interested in measuring the kinetics of equilibration).

The acquisition time must be distinguished from the measurement time, which is the time to measure one sample. The measurement time includes the evaporation time and the diffusion time.

The acquisition time may be used as control parameter of the overall quality of the measurement. Indeed, assuming the system is stable (in thermodynamic equilibrium) over a period longer than the time required for the acquisition time, longer acquisition times lead to better signal quality. Keeping all other parameters constant (e.g. spectral resolution), by increasing the acquisition time the number of average scans increases, decreasing the spectral noise and thus increasing the signal-to-noise ratio. Thus, the spectral noise will decrease with the square root of the number of averaged scans and, accordingly, the square root of the acquisition time. The apparatus design takes into account all parameters affecting the acquisition time. Examples of such parameters and of their effects on the acquisition time are provided below. They substantially relate to the interconnection part 40 and the analytical part 30 designs.

For the interconnection part 40, the aperture fraction, $f_{41}$, may be optimized with regard to acquisition time. Indeed, by increasing the aperture fraction the attenuation within the waveguide 32 increases (see FIG. 8) and the signal-to-noise ratio decreases. To obtain an acceptable signal to noise ratio, acquisition time must be increased. Preferably, the aperture fraction, $f_{41}$, needs to be sufficiently high to enable vapor diffusion from sample channel 11 into analytical part 30 and establishment of thermodynamic equilibrium. As previously stated, the optimal aperture fraction, $f_{41}$, was found between 0.5% and 10%. For instance, aperture fractions of about 5.8% are sufficient to obtain response times less than 400 seconds for water/NaCl solutions with NaCl concentration varying from 0 to 300 g/L.

For the analytical part 30, the optical path length and the internal volume, $v_{ac}$, may be optimized in order to meet the desired acquisition time. By increasing the optical path length the signal increases, therefore the sensitivity also increases. Such an effect can be significantly reduced if the number of reflections on the analytical part wall is high. Moreover, by decreasing the internal volume $v_{ac}$ of the analytical part 30 the free path length between the sidewalls (i.e. walls perpendicular to the substrate surface) decreases, and subsequently the attenuation within the waveguide 32 increases. Therefore, the acquisition time may be increased to obtain an acceptable signal-to-noise ratio, which subsequently increases the measurement time.

## B. Fabrication process

The fluidic part 10, the interconnection 40 and the analysis chamber 30 can be integrally designed and fabricated using a computer-aided design (CAD) software and, e.g., a computer controlled three axis milling machine, photolithography, etc. The machine uses mills and drills of different sizes to remove materials from raw material plates. With regard to the permeable membrane 20, specific means can be used for its proper implementation between fluidic part 10 and analytical part 30 or between fluidic part 10 and interconnection part 40.

The fluidic part material to be chosen depends on the chemical nature of the studied fluids. Therefore, possible materials include polymers such as poly(methyl methacrylate) (PMMA), polyether ether ketone (PEEK), polytetrafluoroethylene (PTFE), polyvinylidene fluoride (PVDF), polypropylene (PP), cyclic olefin copolymer (COC), that overall present good chemical resistance to a vast spectrum of reagents e.g. solvents. Some materials such as PMMA and PEEK can be used for acids. Some materials such as COC and PP are medical conform. For practical and manufacturing reasons polymers are preferred because they enable machining, moulding, embossing or thermoforming.

Other materials such as glass, ceramics or silicon may be considered. For instance, glass presents excellent chemical resistance, while silicon enables fabrication of miniaturized devices with motifs down to the optical resolution limit and subsequently use of micro- and nano-fluidics with ultra-low volumes. However, such materials are difficult to modify or require specific techniques (e.g. photolithography) to be engraved. Other materials such as metals can also be used, but the chemical resistance significantly changes depending on the metal chosen. Most metals can be machined or engraved using photolithography, electrical discharge machining, reactive-ion etching, electroetching, etc. Other materials such as organic, inorganic or composite materials may be used.

Fluidic part 10 can also be created by other fabrication techniques leading to the same design such as, e.g., embossing, stereolithography, injection molding, 3D printing [6]. The choice of the fabricating technique depends on the used material, the technique's resolution and the cost of the technique. For example, using a milling machine the sample channels of the fluidic part 10 may have dimensions up to 10x100 $mm^2$ in section and 50 $\mu$m in-depth, while using 3D printing only 10 $\mu$m in-depth can be obtained for the fluidic part 10. With a laser machine dimension in-depth is limited to 5 $\mu$m. Similarly, the number of parts can increase or decrease depending on the fabrication technique.

For instance, in the case of the fluidic part 10 is made of PMMA, the milling process need to be adapted. Indeed, non-uniform thicknesses have been measured, up to 1 mm thickness difference on the same plate. Thus, the fabrication process of fluidic part 10 first consists in surface milling a raw PMMA plate to obtain uniform thickness, with a tolerable flatness of 50 $\mu$m. Then different machining steps are performed in order to obtain the fluidic part 10 as represented on FIG. 1. These machining steps consist in milling liquid channel 11, drilling input 11 a and output 11 b, assembling and mounting holes intending to receive screws 60 at the final assembly and edge cutting. Input 11 a and output 11 b face the membrane 20 surface in order to avoid leakage issue caused by any curvature of the membrane 20 on top channel (see FIG. 3a and FIG. 3b). Furthermore, fluidic connectors are glued at input 11 a and output 11 b using metallic capillaries of 0.9 mm outer diameter. Connectors can also be incorporated inside fluidic part 10 by design. They can also be detachable by using magnetically attached connectors or clamped connectors, or sealed using, for example, O-rings.

The geometry of the permeable membrane 20 is determined by the surface to cover. The integration of membrane 20 between two layers can be challenging, especially if the membrane is either too thin (about 1 μm, which leads to wrinkles) or too thick (about 500 μm, which often leads to leakage, then a 100 μm deep slot may be milled in fluidic part 10 to prevent deformation of the fluidic part portions 13a and 13b in contact with membrane 20). Also, seals 50 (FIG. 5) may be added around the perimeter of membrane 20 to ensure leak-tightness.

The interconnection part material choice is based on similar considerations as those previously stated for fluidic part 10 (see above). Advantageously, the rigid support 42 of layer 41 is made of PMMA. Preferably, this part may be milled on both sides. Preferably, apertures 42b may be drilled prior to milling vapor cell 42a to ensure the stability of part 40. Preferably, all apertures 42b may be drilled on one side before edge-cutting. Then, on the other side, the intermediate vapor cell 42a would be milled, and assembling thru-holes drilled. After milling, the aluminum layer 41 may be glued on the top face of rigid layer 42. The apertures 41 b of aluminum layer 41 may be perforated with a needle above the apertures 42b of rigid layer 42, in order to open a free passage for vapor diffusing to the analytical part 30. As previously stated, a different reflective layer 41 can be used on top of rigid layer 42, such as a coating with a different material or a different surface modification, e.g. chemical vapor deposition or surface polishing (for metallic materials).

The analytical part 30 may be composed of an integrated-substrate hollow waveguide 32 as described in the patent referenced US20130081447 A1 (sections [0037] and [0096]). Materials and fabrication techniques are fully described in sections [0090] and [0092] of the above-cited patent. Preferably, eight tapped holes of 4 mm and six of 3 mm diameter are milled into part 30 to enable assembly of this part with the other parts of the device. In the event of external detection, $BaF_2$ windows are glued on both sides of waveguide 32 and silicone seals 50 may be used to gas-proof the analytical part 30. Other sealing means can be adhesives, indium wire (metallic seal), clamps or any of those described in section [0095] of the above-cited patent.

All those elements are assembled to create the apparatus (1, 2). The assembly may be performed by screwing parts together thanks to bolts, and threads milled into the analytical part 30. Thus, permeable membrane 20 may be clamped between fluidic part 10 and analytical part 30 or between fluidic part 10 and interconnection part 40 (if present). Silicone seal 50 may be used to seal interconnection part 40 and analytical part 30. Preferably, the used technique has to resist to fluidic pressure up to 200 mbar, chemical reagents and temperatures between at least 0 and 50°C. Assembly can also be performed by another technique or another set of techniques presented hereinafter.

The apparatus (1, 2) may be glued using a layer of adhesive deposited on the interconnecting surfaces of sample channel 32 and permeable membrane 20, for example by using a screen-printing machine. Preferably, the adhesive is chemically compatible with the fluid intended to be sampled, and shows no (or sufficiently low) outgasing in order to keep the functionality of apparatus (1, 2).

The apparatus (1, 2) may be thermally bonded. Such a process may be used for polymer materials like, for example, PMMA, or COC. Indeed, with this process the integrated membrane 20 cannot be clamped enough. Consequently, the process is prone to fluid leakage.

The apparatus (1, 2) may be magnetically bonded via integration of magnets inside the different parts (e.g. on either the side of the membrane 20 i.e.in the fluidic part 10 and the interconnection part 40) that create attractive forces, thereby clamping the parts.

The apparatus (1, 2) may be clamped by external mechanical clamping of all parts using, for example, a vise.

The apparatus (1, 2) may be sealed using a (partial) vacuum by dedicated cavities and interfacing of a vacuum pump or a suction cup. The vacuum applied inside the cavities clamps the parts together due to the pressure exerted by collisions of gas molecules.

### C. Measurements

The method to perform measurements of volatile chemical species dissolved in a gas phase mixture in thermodynamic equilibrium with a liquid phase using the apparatus of the invention, enabling calculating the chemical activity coefficient consists of the following steps:

1) Sample injection

This step consists in the injection of the liquid into sample channel 11 using external pressure. Two cases can be distinguished:

- Liquid can be injected and then rest in sample channel 11 without moving. In this case, the volume of evaporated fluid (vapor volume roughly equals 1000 times the vaporized or boiled liquid volume) must not modify the physical chemistry of the liquid by changing solvent concentration significantly;

- Liquid can be continuously perfused through the sample channel 11;

2) Reference measurement

This step consists in:

- Either blank measurement with nitrogen- or helium-flushed waveguide prior to measuring the sample vapor by perfusing purging gas using 36a and 36b for a single-waveguide analysis

- Or continuous reference measurement with a second equivalent waveguide.

3) Sample measurement

During this step liquid phase evaporates and the vapor phase permeates through the membrane 20 and the interconnection part 40 (if present) into the analytical part 30. The vapor phase builds up until thermodynamic equilibrium is reached between the vapor and the liquid phase. At this stage, chemical activity is equal in the two phases. The time for equilibration depends on liquid characteristics (boiling point and diffusivity of constituents), ambient temperature, ambient pressure, membrane characteristics and geometry of device parts. Excitation and measurement may take place in the analytical part 30.

4) Activity coefficient measurement

This step depends on the nature of the analyte to be analyzed. For pure analytes, activity equal to one. For non-pure analytes (e.g. a water-ethanol sample 30%-70%) activity coefficients are characterized using the prepared ethanol concentration (70%). The activity coefficient is calculated by dividing the measured mixture absorbance by the absorbance of pure ethanol's vapor at saturation (e.g. Abs 70% / Abs 100% = 0.6). In this case, the activity is the measured absorbance difference (0.6) divided by the theoretical activity coefficient for an ideal solution (0.7). Consequently, activity equals to 0.6 / 0.7 = 0.86.
A calibration needs to be performed prior to or after analysis, as conventionally carried out in measurement method.

## D. Other applications

The apparatus of the invention and measurement method may be used for various applications.
The apparatus of the invention can be used for, e.g., on-line analysis. It may be adapted, to analyze liquids including, e.g., drinking water, sea water, aquifers, aquaculture or wastewater. For these particular applications, analytes of interest may be nitrite, nitrates, antibiotic, pharmaceutical and hydrophobic compounds. Apparatus 1 may be adapted to comprise a fluidic part 10, a hydrophobic permeable membrane 20, and an analytical part 30 coupled with a radiation source including an UV-LED excitation source, and a suitable means for signal detection including a photodiode. Apparatus 1 may also be adapted to perform dissolved gas analysis for electrical devices including, for example, oil electric transformers. In this field, the organic solvent is generally used with an analyte selected among, e.g., hydrogen ($H_2$), methane ($CH_4$), ethane ($C_2H_6$), ethylene ($C_2H_4$), acetylene ($C_2H_2$), carbon monoxide (CO) or carbon dioxide ($CO_2$). To achieve such analyses, the apparatus may comprise, e.g., an oleophobic permeable membrane 20 and an interconnection part 40, and may be coupled to sensing methods such as IR spectroscopy in any form. Other applications could be envisaged in fields such as groundwater contamination, geochemistry, migration or dating.
The apparatus of the invention can also be used for process monitoring; examples for such processes being, but non-limited to, fermentation, liquid-liquid extraction, food processing (e.g. lyophilisation, drying, etc.), and bio-processes. For instance, apparatus 2 could be adapted to perform liquid-liquid extraction. For this application, compounds such as solvent, co-solvent, modifiers or alkanes, iso-alkanes, iso-paraffines, octanol, etc. are dissolved in an organic solvent. Apparatus 2 may be adapted to comprise a fluidic part 10, an oleophobic permeable membrane 20, and an analytical part 30 coupled with IR excitation source.
The invention may also be used in formulation analysis for odor/flavor assessment or for other applications such as cosmetics, agrifood and perfume. For instance, in flavor/odor assessment which is generally performed on complex-based solutions comprising organic molecules, apparatus 1 could be adapted to comprise a fluidic part 10, an oleophobic permeable membrane 20, and an analytical part 30 comprising electronic nose/tongue sensors for detection.

**Experimental examples**

Example 1 - Apparatus coupled with FTIR

The device is a layered assembly of four parts: fluidic part 10, permeable membrane 20, interconnection part 40 and analytical part 30. PMMA polymer is used as the construction material for the sample channel and the interconnection part, PTFE for the permeable membrane and EN AW-5754 (AIMg$_3$) aluminum alloy for the analytical part.

The fluidic channel 11 interfaced with permeable membrane 20 exhibits dimensions of 2 mm x 0.5 mm x 40 mm (wxhxl), and has a total volume of 40 $\mu$L. The fluid is pumped through the sample channel 11 due to an external pressure exerted by a syringe pump. The sample channel 11 extends in an input (11a) and an output (11 b) channel, allowing fluid communication with the syringe mounted in the syringe pump. The sample fluid is in physical contact with membrane 20.

The permeable membrane 20 is a lipophobic/oleophobic as well as hydrophobic polymeric membrane made of PTFE of 30 $\mu$m thickness, [55%] surface and volume porosity, with 20 nm pore size. This size allows obtaining a Laplace pressure of around $10^5$ Pa for commonly used complex fluids to analyze. The permeable membrane 20 thus enables evaporation of chemicals into interconnection part 40 and analytical part 30. Due to the small pore size and the oleo- and hydrophobicity of membrane 20, organic and aqueous sample fluids are prevented from passing through membrane 20. The permeable membrane 20 does not exhibit any reactive properties.

The interconnection part 40, is fabricated with circular holes of 400 $\mu$m diameter and has an aperture fraction, $f_{41}$, of around 6% regarding the total surface of the interconnection wall surface. The surface of interconnection part 40 facing the analytical part 30 is glued using an aluminum foil.

The absorption of mid-infrared radiation by vapor phase molecules takes place in the analytical part 30. The analytical part geometry exhibits a cross-section of 2.0 mm x 2.1 mm, and a length of 53.98 mm. The analytical part 30 is fabricated of aluminum alloy with a root mean square surface roughness lower than 1 $\mu$m. The two 2.0 mm x 2.1 mm rectangular end facets are sealed by one IR-transmitting optical window each, made of barium fluoride (BaF$_2$). Furthermore, the analytical part 30 comprises two openings sealed by solenoid valves connected to a nitrogen purging gas system which allow purging of the vapor phase between two measurements and also sealing/closing off the gas volume compartment during measurement and/or equilibration.

The radiation source and interferometer enabling FTIR analysis are located outside analytical part 30, and the infrared radiation is coupled into the analytical part via off-axis parabolic mirrors through one barium fluoride window. The infrared radiation sensitive detector is located in front of the second barium fluoride window and monitors the transmitted infrared radiation. A computer is used to process the detected signal.

Example 2 - Device for odor/flavor assessment

This device is a layered assembly of three parts: fluidic part 10, permeable membrane 20 and analytical part 30. It can be used in the cosmetics and agrifood domains, for odor and flavor analysis. Moulded plastic is used as the construction material for all the parts except for the permeable membrane 20.

The fluidic part 10 has dimensions of 0.2 mm x 0.05 mm x 2 mm (wxhxl), and has a total volume of 200 nL. The fluid is flowing through sample channel 11 due to an external pressure exerted by a syringe pump. Sample channel 11 extends into input 11 a and output 11 b for fluid communication with the syringe mounted in the syringe pump. The sample fluid is in physical contact with the permeable membrane 20.

The permeable membrane 20 is a lipophobic/oleophobic polymeric membrane made of PTFE of 100-200 $\mu$m thickness, [70%] surface and volume porosity, and 20 nm pore size. The permeable membrane 20 thus enables evaporation of odor and flavor molecules into the analytical part 30. Due to the small pore size and the oleo- and hydrophobicity of membrane 20, organic and aqueous sample fluids are prevented from passing through the membrane. The permeable membrane 20 does not exhibit any chemical functions.

The detection of odor/flavor molecules takes place in the analytical part 30. The analytical part exhibits an outer footprint of 5 mm x 5 mm and an inner footprint of 1 mm x 1 mm, and an inner height of 0.5 mm, outer height of 1 mm. The analytical part 30 is fabricated of silicon. The analytical part 30 comprises the chemical nose/tongue sensor for internal detection. It comprises one opening allowing electrical interfacing of the sensor with the external data recording system. A computer is used to process the sensor signal. The chemical nose/tongue can be based on a nanotubes or nanowires or nanoparticles based array (see for example patent application US 20100323925 A1 which is included here by reference), or an array of NEMS/MEMS such as those described in patents US 9291600 B2 or application WO 2015082956 A1 that are both included by reference.

Example 3 - IR analysis of water vapor from water-sodium chloride solution

A four-layered apparatus is coupled with infrared gas phase spectroscopy to analyze the evolution of water peak integral in dependence of the NaCl concentration in a water-NaCl solution versus time at a temperature of 25°C. For this purpose, four NaCl solutions of 0 g/L, 100 g/L, 200 g/L and 300 g/L in deionized water (NaCl solubility up to 360 g/L) were prepared and analyzed.

The measurements were achieved using a spectrometer having a resolution of 4 cm$^{-1}$ for sample measurements and a resolution of 2 cm$^{-1}$ for the background. The spectrometer is equipped with a Deuterated triglycine sulfate (DTGS) detector. The water peak integrals were measured between 3900-3600 cm$^{-1}$ for the first peak, considering a baseline of 1 A of 4400 - 4200 cm$^{-1}$ and a baseline 1 B of 2700 - 2500 cm$^{-1}$. The water peak integrals were measured between 1875 -1350 cm$^{-1}$ for the second peak, considering a baseline 2A of 2250-2100 cm$^{-1}$ and a baseline 2B of 1230 - 1175 cm$^{-1}$. Baseline correction method is linear between the two baseline correction A and B.

With reference to FIG. 9a, after injection of the sample solution in the sample channel, the vapor phase builds up until thermodynamic equilibrium is reached between the vapor and the liquid phase. The establishment of thermodynamic equilibrium is concomitant with the water peak integral stabilization (plateau region). It is noted that the water peaks in the mid-IR spectral region were integrated after linear baseline correction. Error bars are given according to 1-sigma confidence interval to approximate the uncertainty of the measurements. The equilibration time decreases with increasing NaCl concentration in water.

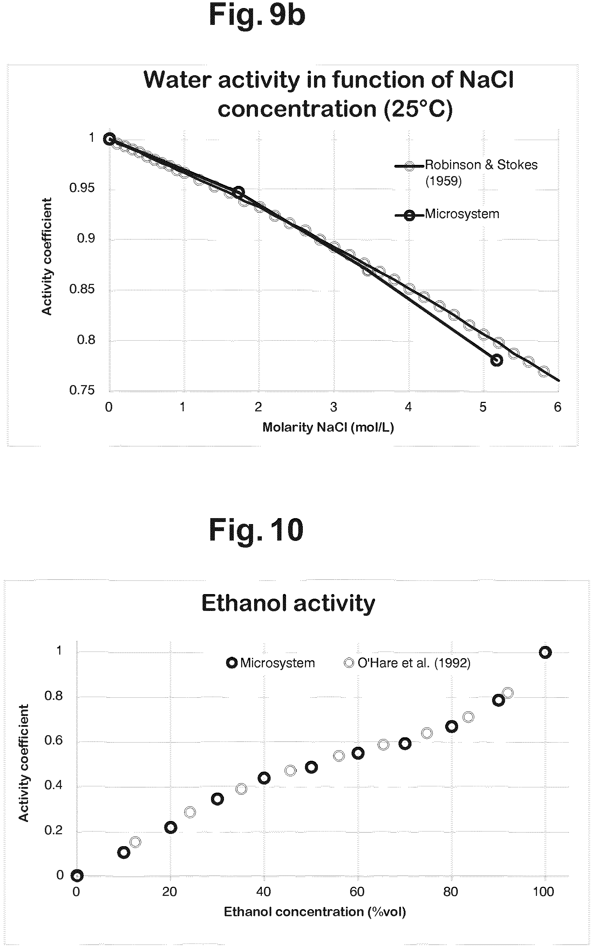

From the plateau region it is therefore possible to calculate a water peak integral's mean value and determine the activity coefficient. FIG. 9b presents a comparison of the evolution of the activity coefficient of water in function of the NaCl molarity (mol/L) at 25 ° C using the apparatus of the invention and the apparatus of Electrolyte Solutions, Second Revised Edition, Robinson and Stokes (Electrolyte Solution, 1959). From this figure, it appears that activity coefficients determined using an apparatus of the invention closely resembles those of Robinson and Stokes, with a slight deviation for the most concentrated water-NaCl solution. Error bars were calculated by calculating the 2-sigma confidence value of the plateau points.

Example 4 - IR analysis of ethanol vapor from water-ethanol solution

An apparatus of the invention is coupled with FTIR gas phase spectroscopy to analyze the activity coefficient of ethanol with varying the volume concentration in water. Data are compared to those of O'Hare et al. (O'Hare, K. D., and P. L. Spedding. "Evaporation of a Binary Liquid Mixture", The Chemical Engineering Journal 48, no. 1 (1992): 1-9). On FIG. 10, the evolution of ethanol activity coefficients determined using an apparatus of the invention clearly overlap with those of the prior art.

Example 5 - IR analysis of dodecane vapor from TOGDA-dodecane solution

FTIR gas phase spectroscopy is used to analyze the activity coefficient of dodecane varying the volume concentration in TODGA (N,N,N',N'-Tetraoctyl Diglycolamide). For this purpose, pure dodecane and a binary mixture 100 mM TODGA in dodecane are measured and characterized using $CH_2$ and $CH_3$ stretching modes from 2800 to 3000 cm-1. TODGA is a non-volatile compound used in solvent extraction processes.

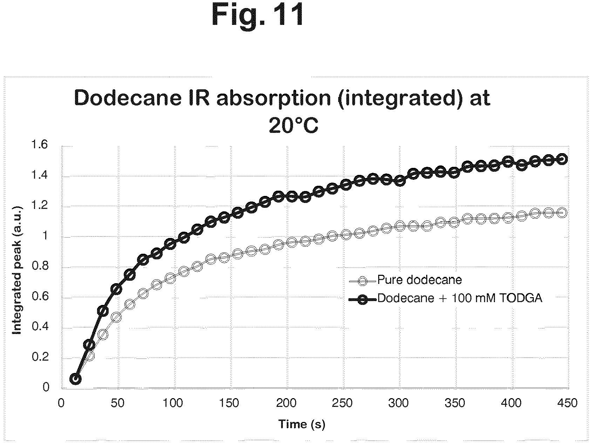

FIG. 11 presents the evolution of both dodecane peak integrals measured by FTIR gas phase spectroscopy for both solutions versus time at a temperature of 20°C. The establishment of thermodynamic equilibrium is concomitant with the peak integral stabilization.

**References:**

[1] M. Karimi et al., (2008). Determination of solvent/polymer interaction parameters of moderately concentrated polymer solutions by vapor pressure osmometry. Polymer, 4910, 2587-2594.

[2] R. E. Gibbs & H. C. Van Ness, (1972). Vapor-liquid equilibria from total-pressure measurements. A new apparatus. Industrial & Engineering Chemistry Fundamentals, 11 (3), 410-413.

[3] M. Ronc & G. R. Ratcliff, (1976). Measurement of vapor-liquid equilibria using a semi-continuous total pressure static equilibrium still. The Canadian Journal of Chemical Engineering, 54(4), 326-332.

[4] N. H. Snow & G. C. Slack (2002). Head-space analysis in modern gas chromatography. TrAC Trends in Analytical Chemistry, 21 (9), 608-617.

[5] K. S. Elvira, et al. (2013). The past, present and potential for microfluidic reactor technology in chemical synthesis. Nature chemistry, 511, 905-915.

[6] D. Guckenberger, et al. "Micromilling: A Method for Ultra-Rapid Prototyping of Plastic Microfluidic Devices" Lab Chip 15, 11, 2015, pages 2364-2378.

**Claims**

1. An apparatus comprising:

   (a) a fluidic part (10) intended to contain a sample;
   (b) an analytical part (30) comprising a waveguide (32); and
   (c) a permeable membrane (20) closing the fluidic part (10), so as to physically separate the fluidic part (10) from the analytical chamber (30).

2. An apparatus according to claim 1, wherein said permeable membrane (20) comprises pores configured to let vapor pass toward said analytical chamber (30) while avoiding any passage of liquid toward said analytical part (30).

3. An apparatus according to any of claims 1 and 2, wherein the sample channel (11) of the fluidic part (10) extends between:

   - an input (11 a) in fluid communication with a reservoir; and
   - an output (11b) in fluid communication with means enabling the liquid passively flowing or being actively pumped through the sample channel (11).

4. An apparatus according to one of the preceding claims, wherein the fluidic part (10) has a volume between 1 pL and 1 L, preferably between 10 and 100 $\mu$L.

5. An apparatus according to claim 3, wherein the fluidic part (10) has a cross-section with:

   - a width between 1 $\mu$m and 10 mm, preferably 2 mm;
   - a depth between 1 $\mu$m and 10 mm, preferably 0.5 mm; and
   - a length between 1 mm and 100 mm, preferably 10 to 100 mm.

6. An apparatus according to any of the preceding claims, wherein the membrane (20) has a thickness between 1 nm and 1000 $\mu$m, preferably between 1 $\mu$m and 50 $\mu$m, and a porosity between 0.5 and 0.95, preferably between 0.55 and 0.95, more preferably between 0.7 and 0.95.

7. An apparatus according to any of the preceding claims, wherein the pores of the membrane (20) have each a pore size between 1 nm and 100 nm, for instance between 10 nm and 100 nm depending on the liquid to be analyzed and the material used for the membrane (20).

8. An apparatus according to any of the preceding claims, wherein the pores of the membrane (20) have a tortuosity between 1 and 5.

9. An apparatus according to any of the preceding claims, wherein the analytical part (30) is sealed from the ambient atmosphere using valves and/or optical windows and/or a detection mean.

10. An apparatus according to claim 9, wherein the analytical part (30) comprises a waveguide (32) sealed with at least one optical window enabling radiation to cross it.

11. An apparatus according to any of the preceding claims further comprising:

   - a light source;
   - means for detecting light passing through the waveguide (32); and

- optionally a computer to collect and treat the data received by the detection mean.

12. An apparatus according to claim 11, wherein the wavelength of the light source lies in the range 100 nm and 1 mm, preferably between 0.75 and 25 μm.

13. An apparatus according to claims 9 to 12, wherein the walls of the waveguide (32) have a surface roughness lower than the radiation wavelength of the excitation source, preferably lower than a tenth of the radiation wavelength of the excitation source, the excitation source preferably emitting ultraviolet-visible light or terahertz radiation, more preferably emitting infrared radiation.

14. An apparatus according to any of the preceding claims, further comprising:

- an interconnection part (40) arranged between the analytical chamber (30) and the permeable membrane (20), said interconnection part (40) comprising:
- a vapor permeable layer (41) made of a material adapted to or coated with a material adapted to at least partially reflect radiation with wavelengths between 100 nm and 1 mm, preferably between 0.75 and 25 μm incident from the waveguide (32) and, optionally, a vapor permeable support layer, (42) to increase the rigidity of layer (41);
- a void volume (44) left between the interconnection part (40) and the membrane (20).

15. An apparatus according to claim 14, further comprising M intermediate spacers (45), so that void volume (44) is subdivided into M+1 discrete void volumes (46), with intermediate spacers (45) increasing the rigidity of layer (41), preferably enough to substitute support layer (42).

16. An apparatus according to any of claims 14 and 15, wherein:

- said layer (41) comprises small apertures (41 b), preferably circular, of 1 μm to 2mm in diameter in case of circular apertures, preferably between 0.1 mm and 0.5 mm, wherein the number N of apertures (41 b) of the layer (41) is chosen so that the additional attenuation induced by the presence of the holes is less than 90%, preferably less than 50%, more preferably less than 25%, even more preferably less than 10%; and
- the rigid support (42) comprises small apertures (42b) of about 0.4mm in diameter in case of circular apertures, preferably 1 μm to 2mm.

17. An apparatus according to any of the preceding claims further comprising:

- means for controlling temperature, pressure and humidity within the waveguide (32) and the void volume (44);
- means to keep temperature, pressure and humidity constant over a given amount of time within the device;
- mean to increase the temperature within the device.

18. Use of an apparatus according to any of the preceding claims for measuring chemical activity coefficients of volatile chemical species dissolved in a gas phase in thermodynamic equilibrium with a liquid phase.

19. Use of an apparatus according to any of the preceding claims for detection of species.

20. Method for measuring the chemical activity coefficients of volatile chemical species dissolved in a gas phase mixture in thermodynamic equilibrium with a liquid phase using the apparatus according any of claims 1 to 17 comprising the following steps:

a) perform a reference measurement consisting of either a blank measurement with a flushed waveguide by perfusing purging gas using (36a) and (36b) for a single-waveguide analysis or continuous reference measurement for a symmetrically-duplicated waveguide analysis;
b) provide a sample vapor in thermodynamic equilibrium with a liquid phase;
c) measure the sample vapor absorbance;
d) calculate the activity coefficient of each component of the mixture by:

i) dividing the measured sample absorbance by the absorbance of pure solvent;
ii) dividing the value calculated in step a) by the theoretical activity coefficient for an ideal solution; the activity coefficient being equal to the value obtain in step b.

**Fig. 1**

Nitrogen Flushing

$\underline{1}$

36a

34

32b  35  32a  31  36b  32c

33a

20

32

10  33b

13b

13a  11a  12  11  11b

**Fig. 2**

$\underline{10}$

11a

51

11

11b

**Fig. 3a**

**Fig. 3b**

Inlet

**Fig. 4a**

# Fig. 4b

# Fig. 5a

Nitrogen Flushing

# Fig. 5b

Nitrogen Flushing

# Fig. 6

# Fig. 7a

M+1=1

41b

41 {

42 {

44

20

# Fig. 7b

M+1=4

41b

41 {

42 {

46   46   46   46

45   45   45

20

# Fig. 7c

M+1=9

41b

41 {

42 {

46   46

45  46  45  46  45  46  46  45  46  45  46  45  46  45
  45      45      45      46      46

20

# Fig. 8

# Fig. 9a

# Fig. 9b

## Water activity in function of NaCl concentration (25°C)

## Fig. 10

## Ethanol activity

# Fig. 11

Dodecane IR absorption (integrated) at 20°C

Europäisches
Patentamt

European
Patent Office

Office européen
des brevets

# EUROPEAN SEARCH REPORT

Application Number

EP 17 19 8247

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2014 210440 A1 (FRAUNHOFER GES ZUR FÖRDERUNG DER ANGEWANDTEN FORSCHUNG E V [DE]) 3 December 2015 (2015-12-03) * paragraphs [0060], [0061]; figure 4 * | 1 | INV. G01N1/22 G01N21/3504 |
| X | JP H06 94609 A (FURUKAWA ELECTRIC CO LTD) 8 April 1994 (1994-04-08) * abstract; figure 2 * | 1,2,7 | |
| A | JP S56 2540 A (KANEGAFUCHI CHEMICAL IND) 12 January 1981 (1981-01-12) * page 11 * | 7 | |

TECHNICAL FIELDS
SEARCHED      (IPC)

G01N

~~The present search report has been drawn up for all claims~~

| Place of search | Date of completion of the search | Examiner |
|---|---|---|
| The Hague | 19 February 2018 | Wilhelm-Shalganov, J |

EPO FORM 1503 03.82 (P04C01)

Europäisches
Patentamt

European
Patent Office

Office européen
des brevets

Application Number

EP 17 19 8247

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

2, 7(completely); 1(partially)

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

Application Number

EP 17 19 8247

The Search Division considers that the present European patent application does not comply with the
requirements of unity of invention and relates to several inventions or groups of inventions, namely:

```
1. claims: 2, 7(completely); 1(partially)

       vapor-permeable membrane
                 ---

2. claims: 3, 5(completely); 1(partially)

       flow channel
                 ---

3. claims: 4(completely); 1(partially)

       sample volume
                 ---

4. claims: 6(completely); 1(partially)

       membrane thickness
                 ---

5. claims: 8(completely); 1(partially)

       tortuosity
                 ---

6. claims: 9, 10, 13(completely); 1(partially)

       sealing
                 ---

7. claims: 11, 12(completely); 1(partially)

       signal processing
                 ---

8. claims: 14-16(completely); 1(partially)

       interconnection part
                 ---

9. claims: 17(completely); 1(partially)

       controlled conditions
                 ---

10. claims: 18, 20(completely); 1(partially)

       chemical activity
                 ---

11. claims: 19(completely); 1(partially)
```

page 1 of 2

**Europäisches Patentamt**
**European Patent Office**
**Office européen des brevets**

**LACK OF UNITY OF INVENTION**
**SHEET B**

Application Number

EP 17 19 8247

The Search Division considers that the present European patent application does not comply with the requirements of unity of invention and relates to several inventions or groups of inventions, namely:

species detection

\- - -

## ANNEX TO THE EUROPEAN SEARCH REPORT
## ON EUROPEAN PATENT APPLICATION NO.

EP 17 19 8247

This annex lists the patent family members relating to the patent documents cited in the above-mentioned European search report.
The members are as contained in the European Patent Office EDP file on
The European Patent Office is in no way liable for these particulars which are merely given for the purpose of information.

19-02-2018

| Patent document cited in search report | Publication date | Patent family member(s) | Publication date |
|---|---|---|---|
| DE 102014210440 A1 | 03-12-2015 | CN 107072601 A<br>DE 102014210440 A1<br>US 2017086716 A1<br>WO 2015185529 A1 | 18-08-2017<br>03-12-2015<br>30-03-2017<br>10-12-2015 |
| JP H0694609 A | 08-04-1994 | NONE | |
| JP S562540 A | 12-01-1981 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2005008993 A1
- US 8361321 B2
- US 20130081447 A1
- US 20100323925 A1
- US 9291600 B2
- WO 2015082956 A1

### Non-patent literature cited in the description

- **E. CURCIO ; E. DRIOLI.** Membrane Distillation and Related Operations-A Review. *Separation & Purification Reviews,* 2005, vol. 34 (1), 35-86
- **ROBINSON ; STOKES.** Electrolyte Solutions. 1959
- **O'HARE, K. D. ; P. L. SPEDDING.** Evaporation of a Binary Liquid Mixture. *The Chemical Engineering Journal,* 1992, vol. 48 (1), 1-9
- **M. KARIMI et al.** Determination of solvent/polymer interaction parameters of moderately concentrated polymer solutions by vapor pressure osmometry. *Polymer,* 2008, vol. 4910, 2587-2594
- **R. E. GIBBS ; H. C. VAN NESS.** apor-liquid equilibria from total-pressure measurements. A new apparatus. *Industrial & Engineering Chemistry Fundamentals,* 1972, vol. 11 (3), 410-413
- **M. RONC ; G. R. RATCLIFF.** Measurement of vapor-liquid equilibria using a semi-continuous total pressure static equilibrium still. *The Canadian Journal of Chemical Engineering,* 1976, vol. 54 (4), 326-332
- **N. H. SNOW ; G. C. SLACK.** Head-space analysis in modern gas chromatography. *TrAC Trends in Analytical Chemistry,* 2002, vol. 21 (9), 608-617
- **K. S. ELVIRA et al.** The past, present and potential for microfluidic reactor technology in chemical synthesis. *Nature chemistry,* 2013, vol. 511, 905-915
- **D. GUCKENBERGER et al.** Micromilling: A Method for Ultra-Rapid Prototyping of Plastic Microfluidic Devices. *Lab Chip,* 2015, vol. 15 (11), 2364-2378